# EUROPEAN PATENT APPLICATION

(11) **EP 0 627 841 A2**
(43) Date of publication of application: **07.12.1994**
(21) Application number: 94108309.9
(22) Date of filing: 30.05.1994
(51) Int. Cl.: H04M 11/00

(54) **Device for the centralized control and monitoring of safety parameters, particularly in heating systems**

(30) Priority: 31.05.1993 IT MI931141
(71) Applicant: RETTAGLIATA SERVIZI S.r.l., I-20016 Pero (Milan) (IT)
(72) Inventor: Bocchino, Luciano, I-20161 Milano (IT)
(74) Representative: Modiano, Guido, Dr.-Ing.

(57) **Abstract**

Device for the centralized control and monitoring of safety parameters, particularly in heating systems, including a central unit (1) connected to a data concentrator (20) which is in turn connected to remote stations (21) associated with the heating systems to be managed. The concentrator (20) is connected to the remote stations (21) by means of a connection over a telephone cable (22) and a connection over radio frequencies (23).

## Description

The present invention relates to a device for the centralized control and monitoring of safety parameters, particularly in heating systems.

As is known, devices for the centralized control and monitoring of heating systems are already commercially available; these devices are generally equipped with a central management unit which is connected to various remote stations so that it can perform remote checking of the operating parameters of the various heating systems and send the various actuation commands.

Connection is provided by means of a telephone cable that transmits the data in both directions.

Use of a telephone cable has the drawback that it does not allow safe reliability in data transmission and furthermore entails a relatively long time for acting on the heating system; this is very dangerous when monitoring essential parameters such as the temperatures and pressures of the system, with the risk that late intervention can lead to severe damage to the system.

A principal aim of the present invention is indeed to solve the problem described above by providing a device for the centralized control and monitoring of safety parameters, particularly in heating systems, that allows to drastically reduce intervention times, thus allowing to always have all the systems located in the remote stations immediately under control while allowing rapid intervention, providing considerably higher safety standards and criteria.

Within the scope of this aim, a particular object of the invention is to provide a device wherein data transmission can be performed with two different sources, thus significantly increasing reliability.

Another object of the present invention is to provide a device for the centralized control and monitoring of safety parameters in heating systems which is capable of giving the greatest assurances of reliability and safety in use by virtue of its particular constructive characteristics.

Another object of the present invention is to provide a device that can be easily obtained starting from commonly commercially available elements and materials and at competitive costs.

With this aim, these objects and others in view, which will become apparent hereinafter, the invention provides a device for the centralized control and monitoring of safety parameters, particularly in heating systems, characterized in that it comprises a central unit connected to a data concentrator which is connected to remote stations associated with the heating systems to be managed, said concentrator being connected to said remote stations by means of a connection over a telephone cable and a connection over radio frequencies.

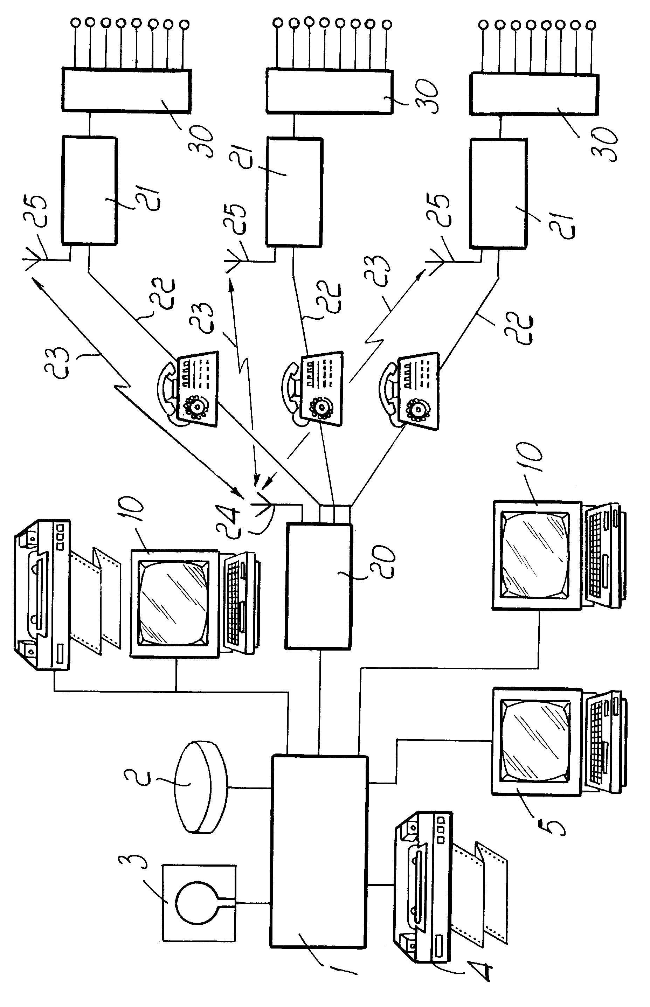

Further characteristics and advantages of the present invention will become apparent from the following detailed description of a preferred but not exclusive embodiment of a device for the centralized control and monitoring of safety parameters, particularly in heating systems, which is illustrated only by way of non-limitative example in the accompanying drawing, wherein the only figure is a diagram of the device according to the invention.

With reference to the only figure, the device for the centralized control and monitoring of safety parameters, particularly in heating systems, according to the invention, comprises a central unit, generally designated by the reference numeral 1, which has a hard disk 2 and diskettes 3 for the input and output management of the data involved in the control or monitoring process in order to execute the optional control of parameters of remotely located heating systems.

A printer 4 is optionally connected to the central unit 1, and at least one integrated monitor and keyboard 5 is connected to the central unit for its management.

Integrated monitors and keyboards 10, with an optional printer, can be connected to the central unit over a bus line and can be provided directly at the user and at the operations room.

The connection for communications between the central unit and the various peripheral units can be organized hierarchically so as to create a customizable priority criterion.

The central unit is connected to a concentrator 20 connected to remote stations 21 which are located proximate to the heating systems to be monitored.

An important feature of the invention is the fact that the connection between the concentrator 20 and the remote stations 21 is performed by means of a telephone cable 22 and of a transmission over radio frequencies 23 which is broadcast by a transmission antenna 24, located at the concentrator, and is received by a receiver antenna 25 which is located at the various remote stations.

In practice, the concentrator 20 receives the information from the central unit 1, checks that the entered datum is correct, recognizes the code of the destination unit, i.e. of the selected remote station 21, and routes the information towards the peripheral unit which in turn, by means of an electronic interface 30, executes it instantly, performing the remote control or telemetry of the associated heating system.

The central control unit may also transmit to the concentrator 20 the request to acquire an item of information from any one of the remote stations 21, and in this case the concentrator, after checking the authenticity of the request, sends the request to the selected remote station, which requests the information by means of the electronic interface 30, all this occurring in real time.

The above described device uses telemetry and remote control information over a radio link, preferably by means of a dedicated radio frequency that allows two-way communication between the concentrator and the remote stations.

The radio link eliminates the problem of finding telephone lines dedicated to remote management and monitoring, particularly in areas where there are saturation problems or otherwise availability problems.

Furthermore, a considerably important aspect is that the radio link allows to reduce the response times with respect to the use of telephone lines.

It should also be noted that the system allows to increase reliability in data transmission, since it is compatible with cable transmission, and therefore a system whose reliability coefficient must be increased can be monitored both over cables and over radio frequencies, thus duplicating the monitoring sources and increasing the overall reliability of the system.

From the foregoing it is evident that the invention achieves the intended aim and objects, and particularly the fact is stressed that a device is provided wherein connection is performed over two mutually independent pathways that can be used both simultaneously and selectively.

The invention thus conceived is susceptible to numerous modifications and variations, all of which are within the scope of the inventive concept.

All the details may furthermore be replaced with other technically equivalent elements.

In practice the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for the centralized control and monitoring of safety parameters, particularly in heating systems, characterized in that it comprises a central unit (1) connected to a data concentrator (20) which is connected to remote stations (21) associated with the heating systems to be managed, said concentrator (20) being connected to said remote stations (21) by means of a connection over a telephone cable (22) and a connection over radio frequencies (23).

2. Device according to claim 1, characterized in that it comprises integrated monitors and keyboards (10) that can be placed at the users and at the operations room.

3. Device according to claim 2, characterized in that it comprises, on said concentrator (20), an antenna (24) for transmitting the data signals and a receiver antenna (25) associated with each remote station (21).

4. Device according to one or more of the preceding claims, characterized in that each remote station (21) is provided with an electronic interface (30) for connection to the associated heating system.
